# EUROPÄISCHE PATENTSCHRIFT

(11) **EP 1 414 676 B1**
(45) Veröffentlichungstag und Bekanntmachung des Hinweises auf die Patenterteilung: **18.05.2005**
(21) Anmeldenummer: 02753014.6
(22) Anmeldetag: 12.07.2002
(51) Int. Cl.: B60R 21/01

(54) **ANORDNUNG MIT EINEM STEUERGERÄT UND EINEM ZUSTANDSERFASSUNGSGERÄT SOWIE VERFAHREN ZUR PRÜFUNG/DIAGNOSE EINER SOLCHEN ANORDNUNG**
ARRANGEMENT WITH A CONTROL DEVICE AND A STATE DETECTION DEVICE, IN ADDITION TO A METHOD FOR TESTING/DIAGNOSING SAID TYPE OF ARRANGEMENT
ENSEMBLE COMPRENANT UN APPAREIL DE COMMANDE ET UN DETECTEUR D'ETAT, ET PROCEDE POUR CONTROLER/DIAGNOSTIQUER UN TEL ENSEMBLE

(30) Priorität: 26.07.2001 DE 10136324
(43) Veröffentlichungstag der Anmeldung: 06.05.2004
(73) Patentinhaber: ROBERT BOSCH GMBH, 70442 Stuttgart (DE); DaimlerChrysler AG, 70546 Stuttgart (DE)
(72) Erfinder: DROBNY, Wolfgang, 74072 Heilbronn (DE); GIESEL, Ruediger, 70376 Stuttgart (DE); MARCHTHALER, Reiner, 73333 Gingen (DE); MEYER, Michael, 71155 Altdorf (DE); LOEWEN, Klaus, 72336 Balingen (DE)
(86) Internationale Anmeldenummer: PCT/DE2002/002548
(87) Internationale Veröffentlichungsnummer: WO 2003/016099

(56) Entgegenhaltungen:
- DE-A- 19 813 962
- DE-A- 19 821 500

## Beschreibung

### Stand der Technik

Die Erfindung betrifft eine Anordnung mit einem Steuergerät zur Auslösung eines einem Sitz eines Fahrzeuges zugeordneten Rückhaltesystems bei Erfassen eines als den Aufprall auf ein Hindernis zu interpretierenden Ereignisses und mit einem Zustandserfassungsgerät, das mit dem Steuergerät über einen Übertragungskanal verbunden ist, um die Auslösung nur anzusteuern, wenn der Zustand vorliegt, wobei im Betrieb das Zustandserfassungsgerät über den Übertragungskanal regelmäßig einen das Vorliegen bzw. Nichtvorliegen anzeigenden entsprechenden Datensatz zum Steuergerät überträgt. Die Erfindung betrifft ferner ein Verfahren zur Prüfung/Diagnose einer solchen Anordnung.

Eine Anordnung gemäß dem Oberbegriff von Anspruch 1 ist aus der DE 198 13 962 A1 bekannt.

Typisch löst ein Steuergerät die Zündung mindestens einer Treibladung eines Airbags aus, wenn Kriterien erfaßt worden sind, die als Aufprall eines Fahrzeuges auf ein Hindernis zu interpretieren sind. Zur Vermeidung unnötiger Auslösungen wird ferner mittels geeigneter Erfassungsgeräte festgestellt, ob in dem betreffenden Sitz tatsächlich eine zu schützende Person sitzt, also ob der Sitz belegt ist. Die Ansteuerung solcher Rückhaltesysteme, wie Front-Airbag, Seiten-Airbag, Gurtstraffer und dergleichen ist auch von anderen erfaßbaren Zuständen abhängig gemacht worden, beispielsweise ob eine sitzende Person sich in einer idealen Sitzposition befindet oder nicht und dergleichen. Üblicherweise wird eine Information über den zu erfassenden Zustand in Form eines Digitalsignale aufweisenden Datensatzes regelmäßig beispielsweise alle 240 ms über den Übertragungskanal zum Steuergerät übertragen, wobei der Übertragungskanal in der Praxis durch einen Leiter gebildet ist.

Um ordnungsgemäße Funktion gewährleisten zu können, muß eine Prüfung bzw. Diagnose erfolgen können. Bei einer solchen Diagnose ist es erforderlich, das Diagnoseergebnis eindeutig dem geprüften Gerät zuordnen zu können. In diesem Zusammenhang ist es äußerst erwünscht, das der Diagnose unterworfene Gerät auch identifizieren zu können, selbst wenn es im Fahrzeug eingebaut ist, etwa auch um statistische Auswertungen durchzuführen. Hierzu ist es erforderlich, sogenannte Typeigenschaften des zu überprüfenden Gerätes feststellen zu können, wie Seriennummer, Fertigungsdatum, Zulieferant und dergleichen mehr.

Bisher ist es erforderlich, die entsprechenden Typeigenschaften, zweckmäßig vor dem Einbau in das Fahrzeug, von Hand zu registrieren, was offensichtlich sehr umständlich und aufwendig ist. Die Nachführung der registrierten Typeigenschaften, insbesondere bei zahlreichen Geräten, ist nicht mehr zuverlässig, wenn ein Fahrzeug einmal ausgeliefert worden ist und das eine oder andere Zustandserfassungsgerät ausgetauscht worden ist. Dies ist selbst dann nicht gewährleistet, wenn das Fahrzeug in Vertragswerkstätten gewartet wird.

Es ist daher Aufgabe der vorliegenden Erfindung, die oben genannte Anordnung bzw. das oben genannte Verfahren derart weiterzubilden, daß im Bedarfsfall die jeweiligen Typeigenschaften in einfacher Weise zur Verfügung gestellt sind.

### Vorteile der Erfindung

Die Erfindung wird bei der genannten Anordnung dadurch gelöst, daß das Zustandserfassungsgerät auf ein definiertes Reizungssignal hin einen Typeigenschaften des Zustandserfassungsgerätes entsprechenden zweiten Datensatz zum Steuergerät übermittelt.

Die Erfindung geht dabei von der Erkenntnis aus, daß im Diagnosefall einer schnellen Erfassung des Vorliegens oder Nichtvorliegens des Zustandes untergeordnete Bedeutung zukommt, also der zeitliche Abstand zwischen zwei aufeinanderfolgenden Übermittlungen des ersten Datensatzes relativ groß sein kann, also auch auf eine Übermittlung des ersten Datensatzes während der Übermittlung des zweiten Datensatzes verzichtet werden kann.

### Zeichnungen

Die Erfindung wird anhand des in der Zeichnung dargestellten Ausführungsbeispiels näher erläutert. Es zeigen
Fig. 1 schematisch eine Anordnung gemäß der Erfindung bei Anwendung in einem Kraftfahrzeug,
Fig. 2 schematisch die Zuordnung von Reizsignalen zum ersten Datensatz und zweiten Datensatz,
Fig. 3 ein Beispiel des Aufbaus und des Formats des zweiten Datensatzes.

### Beschreibung eines Ausführungsbeispiels

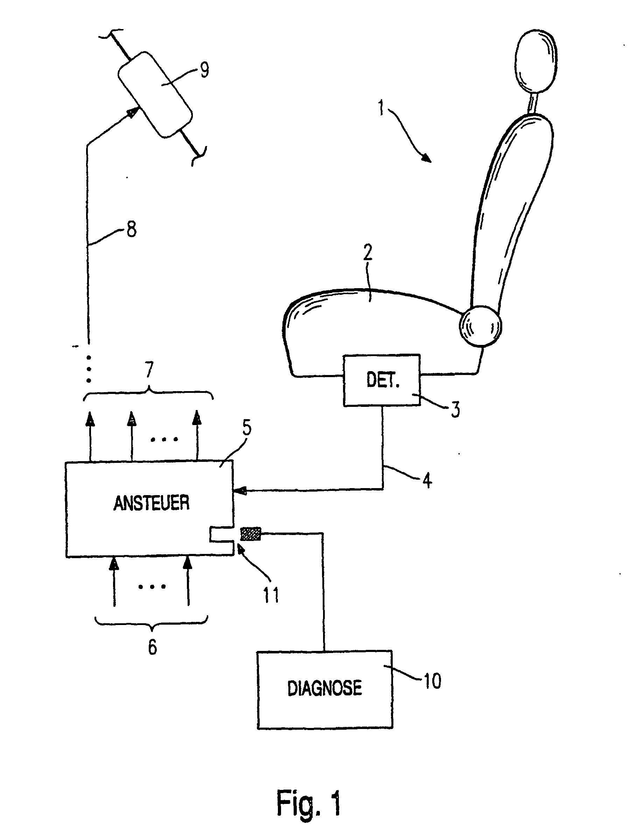

Fig. 1 zeigt schematisch den Sitz 1 eines Kraftfahrzeuges, dessen Sitzfläche 2 ein Zustandserfassungsgerät 3 zugeordnet ist. Mittels dieses Zustandserfassungsgerätes 3 wird in an sich bekannter Weise erfaßt, ob sich eine Person (nicht dargestellt) in dem Sitz 1 befindet oder nicht und wird ein entsprechendes Signal über einen Übertragungskanal 4 einem Steuergerät 5 zugeführt. Dieses Steuergerät 5 empfängt weitere Zustands-Signale 6, wie Informationssignale über die Ist-Geschwindigkeit des Fahrzeuges, über die relative Geschwindigkeit gegenüber einem vorausfahrenden Fahrzeug, über den Zustand des Gurtschlosses und dergleichen mehr, wie dies an sich bekannt ist. Die empfangenen Signale verarbeitet das Steuergerät 5 zur Abgabe von Ausgangssignalen 7, insbesondere zur Zufuhr zu Rückhaltesystemen und insbesondere deren Auslösung im Crash-Fall. Beispielsweise kann eines dieser Signale über eine Verbindungsleitung 8 einem Front-Airbagsystem 9 zugeführt werden, das in das Fahrzeug dem Sitz 1 gegenüberliegend eingebaut ist. Wenn im Betrieb das Steuergerät 5 durch Auswertung der Signale 6 ein Ereignis feststellt, das als ein Crash, also als ein gefährlicher Aufprall auf ein Hindernis zu interpretieren ist, wird der Front-Airbag 9 durch eines der Ausgangssignale 7 zur Auslösung gebracht, falls eine Person im Sitz 1 sitzt und geschützt werden muß. Andere Ausgangssignale 7 des Steuergerätes 5 dienen zur Auslösung anderer Airbagsysteme, etwa eines Seiten-Airbags oder zur Auslösung eines Gurtstraffers. Sie können auch zur zeitlich getrennten Auslösung von Treibladungen dienen, die einem Airbagsystem zugeordnet sind, wie das ebenfalls an sich bekannt ist. Zweckmäßig ist der Übertragungskanal 4 zwischen dem Zustandserfassungsgerät 3 und dem Steuergerät 5 durch einen Leiter oder durch ein anderes Bussystem gebildet. Um die Störanfälligkeit zu verringern, ist es zweckmäßig, über den Übertragungskanal 4 in regelmäßigen kurzen zeitlichen Abständen eine von außen möglichst nicht zu beeinflussende Information zu übertragen, zweckmäßig einen Datensatz. In der Praxis hat sich ein Datensatz von bis zu 3 Byte bewährt, der alle 240 ms regelmäßig über eine unidirektionale Leitung nach einem speziellen Protokoll übertragen wird.

Es ist regelmäßig erforderlich nachzuprüfen, ob die in einem Kraftfahrzeug eingebauten Geräte richtig arbeiten. Dies wird durch eine Diagnose erreicht. In Fig. 1 ist eine regelmäßig durchzuführende Fremd-Diagnose angedeutet mittels eines Diagnosegerätes 10, das über eine Stecker-Buchsen-Verbindung 11 mit dem Steuergerät 5 koppelbar ist. Selbstverständlich ist die Erfindung auch auf Selbst-Diagnosesysteme anwendbar, bei denen ein Diagnosegerät in das Fahrzeug fest eingebaut und mit dem Steuergerät 5 fest verbunden ist oder in diesem integriert ist. Im Diagnosefall ist es nicht nur erforderlich festzustellen, ob die diagnostizierten Geräte richtig arbeiten. Es ist darüber hinaus auch notwendig festzuhalten, etwa in einem Diagnoseprotokoll, welcher Art die beteiligten Geräte sind. Das Diagnoseprotokoll sollte Informationen über die Typenbezeichnung des Gerätes, die Seriennummer des Gerätes, den Fertigungszeitpunkt, den Einbauzeitpunkt, den Hersteller des Gerätes usw. enthalten können, um eine systematische Auswertung durchführen zu können. Neben der Notwendigkeit, feststellen zu können, ob Geräte fehlerhaft sind und daher ausgetauscht werden müssen, kann es auch für den Kraftfahrzeughersteller sinnvoll sein, statistische Daten darüber zu erhalten, welche Geräte besonders anfällig sind und/oder von welchen Zulieferanten besonders anfällige oder besonders zuverlässige Geräte geliefert worden sind.

Zustandserfassungsgeräte wie das Zustandserfassungsgerät 3 sind im allgemeinen fest eingebaut und im Einbauzustand nur sehr schwer zugänglich, insbesondere, um das Typenschild ablesen zu können. Es wird daher in aller Regel darauf verzichtet oder auf das dem ausgelieferten Fahrzeug zugeordnete Datenblatt Bezug genommen, wobei die Gefahr besteht, daß es beispielsweise bei Austausch eines Gerätes nicht richtig nachgeführt ist.

Hier setzt die Erfindung ein.

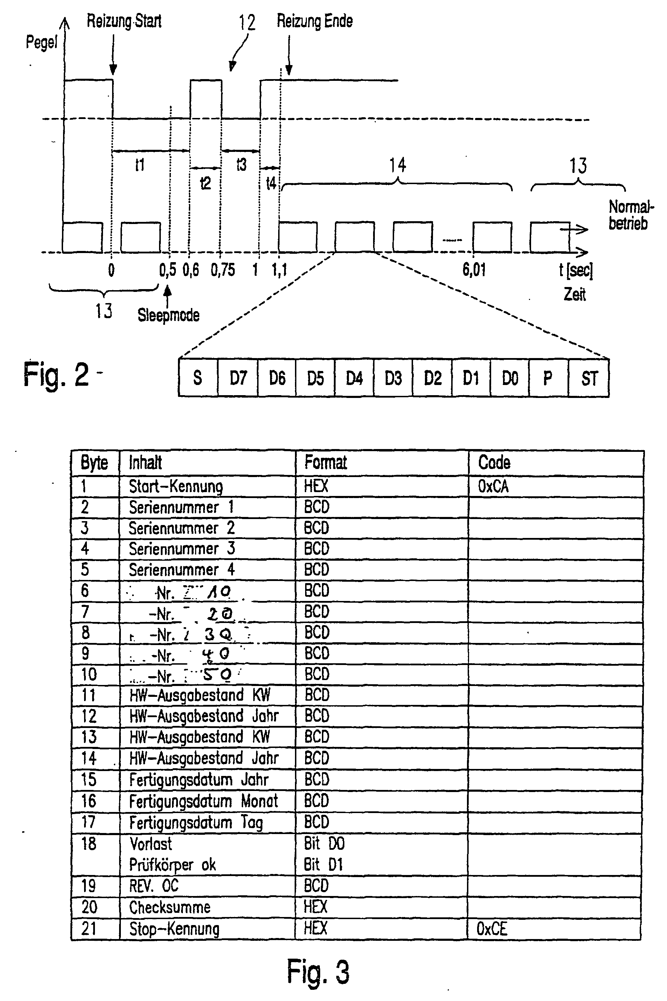

Gemäß der Erfindung wird im Diagnosefall vom Steuergerät 5 zum Zustandserfassungsgerät 3 über den Übertragungskanal 4 ein Reizungssignal übertragen, wie es in Fig. 2 dargestellt ist. Ein Reizungssignal ist ein durch definierte Zeitabstände voneinander getrennter Flanken gekennzeichnetes Signal, wobei die Zeitabstände t1, t2, t3 und t4 beim Ausführungsbeispiel derart sind, daß sie nicht mit Zeitabständen bei einem üblichen Taktsignal korrespondieren können. Das heißt, daß das Vorliegen des Reizungssignals eindeutig erfaßbar ist.

Auf das Reizungssignal hin unterbricht das Zustandserfassungsgerät 3 die regelmäßige Übermittlung des den erfaßten Zustand betreffenden (ersten) Datensatzes ("Sleepmode") und überträgt statt dessen einen zweiten Datensatz, der die Typeigenschaften des Zustandserfassungsgerätes 3 betrifft. Beispielsweise umfaßt der zweite Datensatz 21 Byte, wie in Fig. 2 angedeutet, wobei Fig. 3 ein typisches Protokoll eines solchen zweiten Datensatzes gemäß einem vereinbarten Code wiedergibt. Dieser Code ist im Steuergerät 5 und/oder dem Diagnosegerät 10 decodierbar. Nach Übermittlung des zweiten Datensatzes kehrt das Zustandserfassungsgerät 3 in den ursprünglichen Arbeitszustand (Normalbetrieb) zurück, nämlich der regelmäßigen Übertragung des ersten Datensatzes über den erfaßten Zustand, hier den Belegungszustand der Sitzfläche 2 des Sitzes 1, bis ein erneutes Reizungssignal vom Steuergerät 5 über den Übertragungskanäl 4 abgegeben wird.

Bei dem dargestellten Ausführungsbeispiel eines anschließbaren Fremd-Diagnosegerätes 10 kann das Reizungssignal beispielsweise dann ausgelöst werden, wenn das Diagnosegerät 10 an das Steuergerät 5 angeschlossen wird oder wenn das Diagnosegerät 10 ein entsprechendes Signal an das Steuergerät 5 abgibt, beispielsweise automatisch ausgelöst durch ein Diagnoseprogramm oder von Hand ausgelöst von einem Anwender. Im Fall eines Selbst-Diagnosegerätes kann die Überprüfung des Zustandserfassungsgerätes beispielsweise bei jeder Inbetriebsetzung des Fahrzeuges durchgeführt werden oder in größeren regelmäßigen Abständen während des laufenden Betriebes. Falls mehr als ein Zustandserfassungsgerät mit dem Steuergerät 5 verbunden sind, können entsprechende Reizungssignale zeitlich gleichzeitig oder zeitlich versetzt über die jeweiligen Übertragungskanäle 4 zu den jeweiligen Zustandserfassungsgeräten übermittelt werden, um entsprechende Diagnosen gleichzeitig oder zeitlich versetzt durchzuführen.

Grundsätzlich ist die gleiche Vorgehensweise immer anwendbar, wenn ein regelmäßig unidirektional Daten übertragendes Gerät ausnahmsweise Typdaten zu Diagnose- bzw. Protokollzwecken übertragen soll.

Bei jeder Diagnose stehen somit ohne unnötigen Aufwand sicher auch die Typdaten der diagnostizierten Geräte zur Verfügung und zwar in Form eines Datensatzes, der ohne Probleme den Funktionsdaten des jeweiligen Gerätes eindeutig zugeordnet werden und auch verarbeitet werden kann.

Fig. 2 zeigt zunächst das Reizungssignal 12, das bei Auslösung zu einem Zeitpunkt 0 beginnt und nach einer Zeit t1 einen eine Zeit t2 dauernden Impuls beinhaltet, wobei nach einer weiteren Zeit t3 eine Impulspause beendet ist. Wenn daraufhin das Reizungssignal 12 eine Zeitdauer t4 wieder auf hohem Pegel ist, erkennt das Zustandserfassungsgerät 3 dieses Signal als das Reizungssignal 12.

Dieser Vorgang hat Einfluß auf die Datensätze, die über den Übertragungskanal 4 zum Steuergerät 5 übertragen werden. Zunächst wird regelmäßig ein erster Datensatz 13 übertragen, der beispielsweise 2 oder 3 Byte umfaßt und eine codierte Information über den erfaßten Zustand, hier den Belegungszustand der Sitzfläche 2 des Sitzes 1, enthält. Sobald das Zustandserfassungsgerät 3 beginnt, ein Signal von dem Steuergerät 5 zu empfangen, vollendet es die Übermittlung des ersten Datensatzes 13 und stellt fest, ob es sich um das Reizungssignal 12 handelt oder nicht. Im gegebenen Fall wird bei Ende des Reizungssignals 12 dann der zweite Datensatz 14, der die Typdaten enthält, übertragen, wobei nach Beendigung dieser Übertragung des zweiten Datensatzes 14 wieder regelmäßig erste Datensätze 13 übertragen werden.

Die in Fig. 2 angegebenen Zeiten sind selbstverständlich beispielhaft, auch sind die Anzahlen der Bytes des ersten Datensatzes 13 und auch des zweiten Datensatzes 14 nicht an die angegebenen Zahlen gebunden. Jedoch kann davon ausgegangen werden, daß der zweite Datensatz 14 deutlich mehr Bytes benötigt als der erste Datensatz 13.

Fig. 3 zeigt einen typischen zweiten Datensatz 14, der mit einer Start-Kennung beginnt und mit einer Ende- oder Stop-Kennung endet. Nach der Start-Kennung folgt die Seriennummer des betreffenden Zustandserfassungsgerätes 3. Es schließen sich Kundendaten, z. B. eine laufende Nummer des Kunden , an. Es schließen sich Daten über Hardware (HW)- und Software (SW)-Versionen sowie über den Fertigungszeitpunkt des Zustandserfassungsdgerätes 3, über Prüfdaten und über Revisionsdaten einer Personenklassifikation (OC: Occupant Classification), also eine entsprechende Algorithmusversion an. Vor der Stop-Kennung wird noch eine Prüfziffer, z. B. eine Checksumme, übertragen. Selbstverständlich ist eine andere Reihenfolge der Daten und sind mehr oder weniger und auch andere solcher Daten möglich. Die Codierung erfolgt nach Vereinbarung, z. B. BCD für die Daten und HEX für die Kennungen oder ähnliches.

## Patentansprüche

1. Anordnung mit einem Steuergerät (5) zur Auslösung eines einem Sitz (1) eines Fahrzeugs zugeordneten Rückhaltesystems (9) bei Erfassen eines als den Aufprall auf ein Hindernis zu interpretierenden Ereignisses und mit einem Zustandserfassungsgerät (3), das mit dem Steuergerät (5) über einen Übertragungskanal (4) verbunden ist, um die Auslösung nur anzusteuern, wenn ein vorgegebener Zustand vorliegt, wobei im Betrieb das Zustandserfassungsgerät (3) über den Übertragungskanal (4) regelmäßig einen das Vorliegen oder das Nichtvorliegen des Zustandes entsprechenden ersten Datensatz (13) zum Steuergerät (5) überträgt, **dadurch gekennzeichnet, dass** das Zustandserfassungsgerät (3) auf ein definiertes Reizungssignal (12) hin einen Typeigenschaften des Zustandserfassungsgerätes (3) entsprechenden zweiten Datensatz (14) zum Steuergerät (5) übermittelt, dass das Steuergerät (5) das Reizungssignal (12) auf ein Diagnoseausführungssignal von einer Diagnoseeinrichtung (10) hin zu dem Zustandserfassungsgerät (3) übermittelt und den daraufhin empfangenen zweiten Datensatz (14) der Diagnoseeinrichtung (10) zuführt.

2. Anordnung nach Anspruch 1, **dadurch gekennzeichnet, dass** während der Übermittlung des zweiten Datensatzes (14) der erste Datensatz (13) nicht übermittelt wird.

3. Anordnung nach Anspruch 1 oder 2, **dadurch gekennzeichnet, dass** das Reizungssignal (12) durch eine definierte Abfolge von hohen und niedrigen Pegein gebildet ist.

4. Anordnung nach Anspruch 1, **dadurch gekennzeichnet, dass** die Diagnoseeinrichtung (10) bei Bedarf an das Steuergerät (5) ankoppelbar (11) ist.

5. Anordnung nach einem der Ansprüche 1 bis 4, **dadurch gekennzeichnet, dass** der Übertragungskanal (4) über jeweils eine serielle Schnittstelle mit dem Steuergerät (5) und dem Zustandserfassungsgerät (3) verbunden ist.

6. Anordnung nach einem der Ansprüche 1 bis 5, **dadurch gekennzeichnet, dass** der Übertragungskanal (4) durch einen Leiter gebildet ist.

7. Anordnung nach einem der Ansprüche 1 bis 6, **dadurch gekennzeichnet, dass** das Zustandserfassungsgerät (3) zur Erfassung der Belegung der Sitzfläche (2) eines Sitzes (1) ausgebildet ist.

8. Verfahren zur Diagnose eines auslösbare Rückhaltesysteme aufweisenden Systems mit einem Steuergerät (5) zur Auslösung des Rückhaltesystems bei Erfassen eines als den Aufprall auf ein Hindernis zu interpretierenden Ereignisses und mit einem Zustandserfassungsgerät zur Erfassung eines für die Auslösung des Rückhaltesystems bei Vorliegen des Ereignisses wesentlichen Zustandes, wobei das Zustandserfassungsgerät (3) mit dem Steuergerät über einen Übertragungskanal (4) verbunden ist und im Betrieb regelmäßig einen das Vorliegen oder Nichtvorliegen des Zustandes bezeichnenden ersten Datensatz (13) übermittelt, wobei bei der Durchführung der Diagnose von dem Steuergerät (5) über den Übertragungskanal (4) ein definiertes Reizungssignal (12) übertragen wird und das Zustandserfassungsgerät (3) auf dieses Reizungssignal (12) hin zum Steuergerät (5) über den Übertragungskanal (4) einen Typeigenschaften des Zustandserfassungsgerätes (3) entsprechenden zweiten Datensatz (14) übermittelt, wobei das Reizungssignal (12) vom Steuergerät (5) auf ein Diagnoseausführungssignal von einer Diagnoseeinrichtung (10) hin zu dem Zustandserfassungsgerät (5) den empfangenen zweiten Datensatz (14) der Diagnoseeinrichtung (10) zuführt.

9. Verfahren nach Anspruch 8, **dadurch gekennzeichnet, dass** während der Übermittlung des zweiten Datensatzes (14) der erste Datensatz (13) nicht übermittelt wird.

10. Verfahren nach Anspruch 8 oder 9, **dadurch gekennzeichnet, dass** das Reizungssignal (12) durch eine definierte Abfolge von hohen und niedrigen Pegeln gebildet ist.

## Claims

1. Arrangement having a controller (5) for triggering a restraint system (9) which is associated with a seat (1) of a vehicle when an event which can be interpreted as a collision with an obstacle is detected, and having a state detection device (3) which is connected to the controller (5) via a transmission channel (4) in order to activate the triggering only if a predefined state is present, wherein, during operation, the state detection device (3) regularly transmits a first data record (13), which corresponds to the presence or the absence of the state, to the controller (5) via the transmission channel (4), **characterized in that** the state detection device (3) transmits a second data record (14), which corresponds to model characteristics of the state detection device (3), to the controller (5) in response to a defined excitation signal (12), **in that** the controller (5) transmits the excitation signal (12) to the state detection device (3) in response to a diagnosis executing signal from a diagnosis device (10), and supplies the second data record (14), which is received in response to the said excitation signal (12), to the diagnosis device (10).

2. Arrangement according to Claim 1, **characterized in that** the first data record (13) is not transmitted during the transmission of the second data record (14).

3. Arrangement according to Claim 1 or 2, **characterized in that** the excitation signal (12) is formed by a defined sequence of high and low levels.

4. Arrangement according to Claim 1, **characterized in that** the diagnosis device (10) can be coupled (11) to the controller (5) as required.

5. Arrangement according to one of Claims 1 to 4, **characterized in that** the transmission channel (4) is connected to the controller (5) and to the state detection device (3) via a serial interface in each case.

6. Arrangement according to one of Claims 1 to 5, **characterized in that** the transmission channel (4) is formed by a conductor.

7. Arrangement according to one of Claims 1 to 6, **characterized in that** the state detection device (3) is designed to detect whether the sitting surface (2) of a seat (1) is occupied.

8. Method for diagnosis of a system which has restraint systems which can be triggered, which has a controller (5) for triggering the restraint system when an event which can be interpreted as a collision with an obstacle is detected, and which has a state detection device for detecting a state which is essential for triggering the restraint system when the event occurs, wherein the state detection device (3) is connected to the controller via a transmission channel (4) and, during operation, regularly transmits a first data record (13) which identifies the presence or absence of the state, wherein, during the diagnosis, a defined excitation signal (12) is transmitted from the controller (5) via the transmission channel (4) and the state detection device (3) transmits a second data record (14), which corresponds to model characteristics of the state detection device (3), to the controller (5) via the transmission channel (4) in response to this excitation signal (12), wherein the excitation signal (12) is transmitted from the controller (5) to the state detection device (3) in response to a diagnosis executing signal from a diagnosis device (10), and the second data record (14), which is received in response to the said excitation signal (12), is supplied to the diagnosis device (10).

9. Method according to Claim 8, **characterized in that** the first data record (13) is not transmitted during the transmission of the second data record (14).

10. Method according to Claim 8 or 9, **characterized in that** the excitation signal (12) is formed by a defined sequence of high and low levels.

## Revendications

1. Ensemble comprenant un appareil de commande (5) pour déclencher un système de retenue (9) associé à un siège (1) d'un véhicule lors de la détection d'un événement devant être interprété comme un impact contre un obstacle, et comprenant un détecteur d'état (3) relié à l'appareil de commande (5) via un canal de transmission (4) afin de commander le déclenchement uniquement lorsqu'on est en présence d'un état prédéterminé, le détecteur d'état (3) transmettant régulièrement lors du fonctionnement vers l'appareil de commande (5) via le canal de transmission (4) un premier jeu de données (13) correspondant à la présence ou à l'absence de l'état,
**caractérisé en ce que**
sur un signal d'activation (12) défini, le détecteur d'état (3) transmet vers l'appareil de commande (5) un deuxième jeu de données (14) correspondant aux caractéristiques de type du détecteur d'état (3), l'appareil de commande (5) transmet le signal d'activation (12) sur un signal d'établissement de diagnostic provenant d'un dispositif de diagnostic (10) vers le détecteur d'état (3) et transmet le deuxième jeu de données (14) reçu ensuite au dispositif de diagnostic (10).

2. Ensemble selon la revendication 1,
**caractérisé en ce que**
pendant la transmission du deuxième jeu de données (14), le premier jeu de données (13) n'est pas transmis.

3. Ensemble selon la revendication 1 ou 2,
**caractérisé en ce que**
le signal d'activation (12) est formé par une succession définie de niveaux hauts et bas.

4. Ensemble selon la revendication 1,
**caractérisé en ce que**
le dispositif de diagnostic (10) peut au besoin être couplé (11) à l'appareil de commande (5).

5. Ensemble selon l'une des revendications 1 à 4,
**caractérisé en ce que**
le canal de transmission (4) est relié à l'appareil de commande (5) et au détecteur d'état (3) via respectivement une interface série.

6. Ensemble selon l'une des revendications 1 à 5,
**caractérisé en ce que**
le canal de transmission (4) est formé par un conducteur.

7. Ensemble selon l'une des revendications 1 à 6,
**caractérisé en ce que**
le détecteur d'état (3) est configuré pour détecter l'occupation de la surface de siège (2) d'un siège (1).

8. Procédé de diagnostic d'un système présentant des systèmes de retenue pouvant être déclenchés, comprenant un appareil de commande (5) pour le déclenchement du système de retenue lors de la détection d'un événement devant être interprété comme un impact contre un obstacle, et comprenant un détecteur d'état permettant de détecter un état essentiel pour le déclenchement du système de retenue en présence de l'événement, le détecteur d'état (3) étant relié à l'appareil de commande (5) via un canal de transmission (4) et transmettant régulièrement, lors du fonctionnement, un premier jeu de données (13) caractérisant la présence ou l'absence de l'état,
selon lequel
un signal d'activation (12) défini est transmis par l'appareil de commande (5) via le canal de transmission (4) lors de la mise en oeuvre du diagnostic, et le détecteur d'état (3) transmet sur ce signal d'activation (12) vers l'appareil de commande (5) via le canal de transmission (4) un deuxième jeu de données (14) correspondant aux propriétés de type du détecteur d'état (3), le signal d'activation (12) transmet à partir de l'appareil de commande (5), sur un signal d'établissement de diagnostic provenant d'un dispositif de diagnostic (10) et transmis au détecteur d'état (3), le deuxième jeu de données reçu (14) au dispositif de diagnostic (10).

9. Procédé selon la revendication 8,
**caractérisé en ce que**
pendant la transmission du deuxième jeu de données (14), le premier jeu de données (13) n'est pas transmis.

10. Procédé selon la revendication 8 ou 9,
**caractérisé en ce que**
le signal d'activation (12) est formé par une succession définie de niveaux hauts et bas.
